# FASCICULE DE BREVET EUROPEEN

(11) **EP 1 260 994 B1**
(45) Date de publication et mention de la délivrance du brevet: **02.12.2009**
(21) Numéro de dépôt: 02291167.1
(22) Date de dépôt: 07.05.2002
(51) Int. Cl.: H01B 17/40

(54) **Isolateur composite avec une fibre optique guidée entre une armature métallique et la tige support**
Verbundisolator mit einer optischer Faser der zwischen eine Metallarmatur und dem Tragstab geleitet ist
Composite insulator with an optical fibre which is guided between a metal fitting and the supporting rod

(30) Priorité: 22.05.2001 FR 0106703
(43) Date de publication de la demande: 27.11.2002
(73) Titulaire: SEDIVER, SOCIETE EUROPEENNE D'ISOLATEURS EN VERRE ET COMPOSITE, F-92017 Nanterre Cédex (FR)
(72) Inventeur: Lepley, Damien, 63000 Clermont-Ferrant (FR); Moal, Eric, 03270 Saint-Yorre (FR)
(74) Mandataire: Prugneau, Philippe

(56) Documents cités:
- EP-A- 0 146 845
- US-A- 4 610 033
- PATENT ABSTRACTS OF JAPAN vol. 018, no. 017 (E-1488), 12 janvier 1994 (1994-01-12) & JP 05 258629 A (NGK INSULATORS LTD), 8 octobre 1993 (1993-10-08)

## Description

L'invention concerne les isolateurs électriques composites de poste ou de ligne moyenne ou haute tension équipés de fibres optiques et plus particulièrement un isolateur électrique composite comprenant une tige support généralement en un matériau composite, deux armatures métalliques formant chacune une douille dans laquelle est insérée une extrémité correspondante de la tige support, au moins une fibre optique posée sur la tige support et un revêtement extérieur isolant entourant la tige support en recouvrant la fibre optique dont au moins une extrémité est guidée vers l'extérieur de l'isolateur à travers une armature.

Le document de brevet EP-926516 divulgue un tel isolateur électrique composite de poste. Dans cet isolateur connu, la fibre optique est collée sur la périphérie extérieure de la tige support et chaque extrémité de la fibre optique est guidée vers l'extérieur de l'isolateur à travers une armature par une gorge annulaire formée sur la surface extérieure d'une partie cylindrique de l'armature entourée par une partie annulaire extérieure de l'armature puis par un conduit traversant la partie annulaire et débouchant à l'extérieur de l'armature. Un tel agencement est compliqué à réaliser, pose des problèmes d'étanchéité de l'isolateur le long de la fibre optique et n'est pas adapté à des isolateurs de faible diamètre, comme les isolateurs de ligne.

Le but de l'invention est de remédier à ces inconvénients.

A cet effet, l'invention a pour objet un isolateur électrique composite comprenant une tige support généralement en un matériau composite, deux armatures métalliques formant chacune une douille dans laquelle est insérée une extrémité correspondante de la tige support, au moins une fibre optique posée sur la tige support et un revêtement extérieur isolant entourant la tige support en recouvrant la fibre optique dont au moins une extrémité est guidée vers l'extérieur de l'isolateur à travers une armature, caractérisé en ce que ladite extrémité de la fibre optique est guidée à travers l'armature par une rainure formée sur la surface intérieure de la douille de l'armature, cette rainure s'ouvrant sur la périphérie extérieure de la tige support, et par un conduit prolongeant ladite rainure et s'ouvrant vers l'extérieur de l'armature. Par conséquent, dans l'isolateur selon l'invention, la fibre optique est guidée en partie entre la tige et l'armature métallique ce qui permet de concevoir une armature de faible diamètre extérieur. La rainure et le conduit peuvent être facilement réalisés en fonderie par moulage sans usinage ce qui est particulièrement économique. L'étanchéité de l'isolateur est facilement obtenue en bouchant le conduit avec un gel isolant ou de la colle.

Selon un mode de réalisation particulier de l'isolateur selon l'invention, la rainure est rectiligne et s'étend suivant l'axe longitudinal de la douille de l'armature qui peut ainsi être fixée sur la tige support par un rétreint mécanique. Le conduit forme un coude pour s'ouvrir sur un côté latéral de l'armature métallique, le rayon de courbure du conduit étant adapté aux caractéristiques mécaniques de la fibre optique. La rainure est évasée sur le bord extérieur de l'ouverture de la douille de l'armature de sorte que la fibre optique généralement enroulée en hélice autour de la tige support peut être introduite dans la rainure sans endommagement. Un joint de colle entourant la tige est disposé contre le bord extérieur de l'ouverture de la douille de l'armature pour fermer la rainure. De la sorte, le revêtement extérieur, généralement un élastomère, ne pénètre pas dans la rainure lors de son application sur la tige support, par injection par exemple. Ainsi, on élimine les risques d'endommagement de la fibre optique.

L'invention, ses caractéristiques et ses avantages sont précisés dans la description qui suit en liaison avec les figures évoquées ci-dessous.

La figure 1 présente une vue schématique partielle d'un exemple d'isolateur composite selon l'invention. Sur cette figure, une partie de l'enveloppe entourant la tige support a été éliminée pour montrer la fibre optique disposée à l'intérieur de l'isolateur.

La figure 2 est une vue en coupe longitudinale d'une armature métallique de l'isolateur selon l'invention.

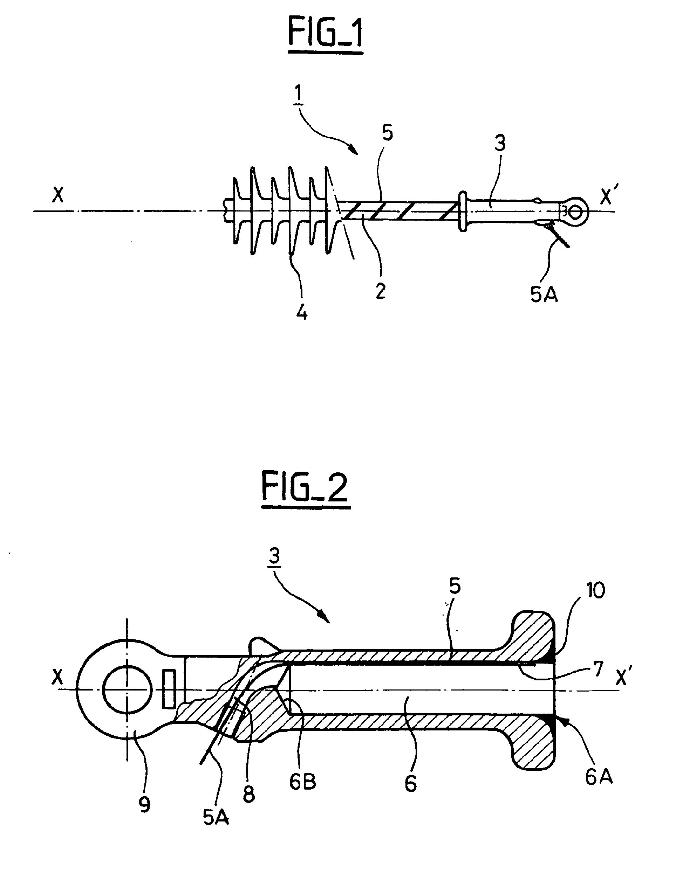

La figure 1 montre partiellement un isolateur électrique composite de ligne 1 selon l'invention comprenant une tige support 2 en un matériau composite isolant électriquement, généralement un composite résine époxy fibres de verre. La tige support 2 d'axe longitudinal XX' est ici un jonc de petit diamètre mais l'invention s'étend à un isolateur électrique composite de poste ayant une tige support de forme tubulaire. L'isolateur 1 comprend deux armatures métalliques formant chacune une douille dans laquelle est insérée une extrémité correspondante de la tige support 2. La figure 1 montre une seule armature métallique 3. La tige support 2 est entourée par un revêtement extérieur isolant 4 qui forme des ailettes comme cela est bien connu. Le revêtement extérieur 4 est généralement un élastomère injecté sur la tige support. L'isolateur 1 comprend encore au moins une fibre optique 5 posée sur la périphérie extérieure de la tige support 2, cette fibre optique étant recouverte par le revêtement 4 et ayant au moins une extrémité 5A qui est guidée vers l'extérieur de l'isolateur à travers l'armature métallique 3 pour être connectée à une autre fibre optique, un capteur ou un appareil de mesure. Sur la figure 1, la fibre optique 5 est enroulée en hélice autour de la tige support 2 et est fixée à celle-ci de préférence par collage, par exemple avec le mélange résine epoxy du composite.

Figure 2, l'armature métallique 3 forme une douille cylindrique 6 d'axe longitudinal XX' dans laquelle est insérée une extrémité correspondante de la tige support 2. L'extrémité 5A de la fibre optique est guidée vers l'extérieur de l'isolateur 1 entre la tige support 2 et l'armature métallique 3 par une rainure 7 de faible profondeur formée sur la surface intérieure de la douille 6 de l'armature, cette rainure s'ouvrant sur la périphérie extérieure de la tige support 2. Dans l'exemple de la figure 2, la rainure 7 est rectiligne et s'étend suivant l'axe XX' depuis le bord extérieur de l'ouverture 6A de la douille jusqu'au fond 6B de la douille où elle est prolongée par un conduit 8 intégralement formé dans l'armature 3 et qui s'ouvre vers l'extérieur de l'armature 3.

Comme visible sur la figure 2, la fibre optique 5 passe à l'intérieur du conduit 8 pour déboucher vers l'extérieur de l'isolateur. Ce conduit 8 forme un coude pour s'ouvrir sur le côté latéral de l'armature 3 qui est diamétralement opposé à celui où est formée la rainure 7. Avec cet agencement, l'armature 3 peut être munie à son extrémité libre d'un système de suspension comme un anneau 9. Comme cela apparaît sur la figure 2, le conduit 8 a un diamètre intérieur qui se rétrécit en allant de l'intérieur de la douille 6 vers l'extérieur de l'armature 3, l'ouverture du conduit 8 sur le côté latéral de l'armature 3 pouvant recevoir un connecteur optique auquel est raccordée l'extrémité 5A de la fibre optique. La rainure 7 est par ailleurs évasée sur le bord extérieur de l'ouverture 6A de la douille pour faciliter la mise en place sans détérioration de la fibre optique sur la tige support 2 et dans la rainure 7.

Pour fabriquer l'isolateur composite selon l'invention, on assemble par exemple par rétreint mécanique les armatures telles que 3 avec la tige support 2. Ensuite on pose la fibre optique 5 sur la périphérie extérieure de la tige support 2 en passant chaque extrémité de la fibre optique 5 dans la rainure 7 et le conduit 8 de chaque armature. La fibre optique ressort donc sur le côté latéral de chaque armature. Avant de poser le revêtement extérieur 4 sur la tige support 2, un joint de colle 10 est posé autour de la tige support 2 contre le bord extérieur de l'ouverture 6A de la douille de chaque armature de sorte à fermer la rainure 7 de cette armature. Ensuite le revêtement extérieur 4 est posé autour de la tige support 2, généralement par injection, sans risque qu'il pénètre dans la rainure 7 des armatures. Le revêtement extérieur 4 est ensuite vulcanisé. Le conduit 8 est finalement obturé par un gel ou de la colle pour fermer de manière étanche l'isolateur.

Comme indiqué plus haut, l'invention s'applique à des isolateurs composites de poste ou de ligne à tige support pleine ou creuse avec une ou plusieurs fibres optiques posées sur la tige support.

## Revendications

1. Isolateur électrique composite comprenant une tige support (2) généralement en un matériau composite, deux armatures métalliques (3) formant chacune une douille (6) dans laquelle est insérée une extrémité correspondante de la tige support, au moins une fibre optique (5) posée sur la périphérie extérieure de la tige support et un revêtement extérieur (4) isolant entourant la tige support en recouvrant la fibre optique dont au moins une extrémité (5A) est guidée vers l'extérieur de l'isolateur à travers une armature, **caractérisé en ce que** ladite extrémité (5A) de la fibre optique est guidée à travers l'armature (3) par une rainure (7) formée sur la surface intérieure de la douille de l'armature, cette rainure s'ouvrant sur la périphérie extérieure de la tige support, et par un conduit (8) prolongeant ladite rainure et s'ouvrant vers l'extérieur de l'armature.

2. Isolateur selon la revendication 1, dans lequel la rainure (7) est rectiligne et s'étend suivant l'axe longitudinal (XX') de la douille de l'armature (3).

3. Isolateur selon la revendication 2, dans lequel le conduit (7) forme un coude pour s'ouvrir sur un côté latéral de l'armature (3).

4. Isolateur selon l'une des revendications 1 à 3, dans lequel la rainure (7) est évasée sur le bord extérieur de l'ouverture (6A) de la douille de l'armature.

5. Isolateur selon la revendication 4, dans lequel un joint de colle (10) entourant la tige support est disposé contre le bord extérieur de l'ouverture de la douille de l'armature pour fermer la rainure.

## Claims

1. A composite electrical insulator comprising a support rod (2) of composite material,
two metal end-fittings (3) each forming a cavity (6) of cylindrical shape in which an end of the support rod is inserted, at least one optical fiber (5) placed on the outer periphery of the support rod and an insulating outer coating (4) surrounding the support rod and covering the optical fiber, said optical fibber having an end (5A) which is guided through an end-fitting to the outer side of the insulator, **characterized in that** said optical fiber end (5A) is guided trough the end-fitting (3) by a groove (7) which is formed on the inner surface of the insulator cavity, this groove being opened out to the outer periphery of the support rod, and by a duct (8) extending said groove and being opened out to the outer side of the end-fitting.

2. An insulator according to claim 1, in which said groove (7) is rectilinear and extends along the longitudinal axis (XX') of the cavity of said end-fitting (3).

3. An insulator according to claim 2, in which said duct (8) forms a bend within said end-fitting to be opened out to the a lateral side of the end-fitting (3).

4. An insulator according to any one of claims 1 to 3, in which the groove (7) flares over the outer edge of the opening (6) of the end-fitting duct cavity.

5. An insulator according to claim 4, in which a gasket of adhesive (10) surrounding the support rod is placed against the outer edge of the opening of the end-fitting cavity in order to close the groove.

## Patentansprüche

1. Elektrischer Verbundisolator, umfassend einen, allgemein aus einem Verbundmaterial bestehenden Tragstab (2), zwei Metallbeschlagteilen (3), von denen jedes eine Hülse (6) ausbildet, in welche ein entsprechendes Ende des Tragstabs eingefügt ist, mindestens eine, auf dem äußeren Umfang des Tragstabs angebrachte optische Faser (5) und eine isolierende, äußere Ummantelung (4), welche den Tragstab umgibt, wobei sie die optische Faser bedeckt, von der mindestens ein Ende(5A)durch das Beschlagteil zu der Außenseite des Isolators geführt ist, **dadurch gekennzeichnet, dass** das Ende (5A) der optischen Faser durch eine Rille (7) und durch einen die Rille (7) verlängernden Kanal (8) durch das Beschlagteil (3) geführt ist, wobei die Rille (7) auf der inneren Oberfläche der Beschlagteilhülse ausgebildet und zu dem äußeren Umfang des Tragstabs offen ist und wobei der Kanal (8) in Richtung der Außenseite des Beschlagteils offen ist.

2. Isolator gemäß Anspruch 1, bei welchem die Rille (7) geradlinig ist und sich entlang der Längsachse (XX') der Beschlagteilhülse (3) erstreckt.

3. Isolator gemäß Anspruch 2, bei welchem der Kanal (8) einen Bogen ausbildet, um sich auf der Lateralseite des Beschlagteils (3) zu öffnen.

4. Isolator gemäß einem der Ansprüche 1 bis 3, bei welchem die Rille (7) zu dem äußeren Rand der Öffnung (6A) der Beschlagteilhülse geweitet ist.

5. Isolator gemäß Anspruch 4, in welchem eine, den Tragstab umgebende, Klebeverbindung (10) gegen den äußeren Rand der Öffnung der Beschlagteilhülse angebracht ist, um die Rille zu schließen.
